# EUROPÄISCHE PATENTSCHRIFT

(11) **EP 3 254 167 B1**
(45) Veröffentlichungstag und Bekanntmachung des Hinweises auf die Patenterteilung: **07.10.2020**
(21) Anmeldenummer: 16700406.8
(22) Anmeldetag: 11.01.2016
(51) Int. Cl.: G05G 5/06, F16H 59/08, G05G 1/08

(54) **VORRICHTUNG UND VERFAHREN ZUM EINSTELLEN EINER DREHBEWEGUNG ODER SCHWENKBEWEGUNG EINES BEDIENELEMENTS FÜR EIN FAHRZEUG**
APPARATUS AND METHOD FOR ADJUSTING A ROTARY OR PIVOTING MOVEMENT OF A CONTROL ELEMENT FOR A VEHICLE
DISPOSITIF ET PROCÉDÉ POUR RÉGLER UN MOUVEMENT DE ROTATION OU UN MOUVEMENT DE PIVOTEMENT D'UN ÉLÉMENT DE COMMANDE POUR UN VÉHICULE

(30) Priorität: 05.02.2015 DE 102015201976
(43) Veröffentlichungstag der Anmeldung: 13.12.2017
(73) Patentinhaber: ZF Friedrichshafen AG, 88046 Friedrichshafen (DE)
(72) Erfinder: HESSEL, Alex, 49448 Lemförde (DE)
(74) Vertreter: ZF Friedrichshafen AG
(86) Internationale Anmeldenummer: PCT/EP2016/050331
(87) Internationale Veröffentlichungsnummer: WO 2016/124356

(56) Entgegenhaltungen:
- DE-A1- 19 707 170
- US-A- 3 059 498
- US-B1- 6 578 447

## Beschreibung

Die vorliegende Erfindung bezieht sich auf eine Vorrichtung zum Einstellen einer Drehbewegung oder Schwenkbewegung eines Bedienelements für ein Fahrzeug und auf ein Verfahren zum Einstellen einer Drehbewegung oder Schwenkbewegung eines Bedienelements für ein Fahrzeug.

Eine sogenannte Rastiervorrichtung kann beispielsweise einen Rastierpin, eine Rastierkugel, eine Rastierrolle oder dergleichen aufweisen. Eine solche Rastiervorrichtung kann im Fahrzeugbereich bzw. Automobilbereich im Zusammenhang mit elektrischen Schalteinrichtungen, wie beispielsweise einem automatischen Schaltgetriebe, oder für eine Führung und haptische Positionsrückkopplung eines Drehschalters, Schalthebels oder Wählhebels eingesetzt werden. Die DE 10 2007 038 547 A1 offenbart einen Drehschalter mit Rastierung. Auch bekannt, z.B. aus der DE197 07 170 A1, sind Rastiervorrichtungen mit einer Kraftübertragungseinrichtung und einem Rastierelement, wobei das Rastierelement an der Kraftübertragungseinrichtung drehbar gelagert anordenbar ist, und wobei das Rastierelement aufgrund der Betätigungskraft entlang einer Rastierkontur rollend bewegbar ist.

Vor diesem Hintergrund schafft die vorliegende Erfindung eine verbesserte Vorrichtung zum Einstellen einer Drehbewegung oder Schwenkbewegung eines Bedienelements für ein Fahrzeug und ein verbessertes Verfahren zum Einstellen einer Drehbewegung oder Schwenkbewegung eines Bedienelements für ein Fahrzeug gemäß den Hauptansprüchen. Vorteilhafte Ausgestaltungen ergeben sich aus den Unteransprüchen und der nachfolgenden Beschreibung.

Gemäß Ausführungsformen der vorliegenden Erfindung kann insbesondere eine Vorrichtung zur Rastierung bzw. Rastiervorrichtung für ein Bedienelement eines Fahrzeugs bereitgestellt werden, wobei ein Rastierelement an einer Rastierkontur entlang rollen kann. Dabei kann das Rastierelement drehbar in einer Kraft übertragenden Trägereinrichtung gelagert sein. Die Trägereinrichtung oder Kraftübertragungseinrichtung kann hierbei ausgebildet sein, um bei einer Betätigung eines Bedienelements, mit dem die Vorrichtung koppelbar sein kann, das Rastierelement rotatorisch entlang der Rastierkontur zu bewegen.

Vorteilhafterweise kann gemäß Ausführungsformen der vorliegenden Erfindung beispielsweise dadurch, dass das Rastierelement entlang der Rastierkontur rollen kann, anstatt auf der Rastierkontur zu schleifen oder zu rutschen, ein Verschleiß reduziert werden. Zusätzlich zu einem verringerten Verschleiß an Rastierelement und Rastierkontur können auch eine Haptik bei einer Betätigung oder Bedienung des Bedienelements verbessert sowie eine Teileanzahl der Vorrichtung verringert und damit eine Toleranzkette verkürzt werden.

Eine Vorrichtung zum Einstellen einer Drehbewegung oder Schwenkbewegung eines Bedienelements für ein Fahrzeug weist eine gekrümmte Rastierkontur zum Definieren zumindest einer Schaltstellung des Bedienelements, ein Rastierelement zum Eingreifen in die Rastierkontur und eine Kraftübertragungseinrichtung auf, mit der das Bedienelement mechanisch koppelbar ist, um eine bei der Drehbewegung oder Schwenkbewegung des Bedienelements auf das Bedienelement ausgeübte Betätigungskraft aufzunehmen und auf das Rastierelement zu übertragen, wobei das Rastierelement an der Kraftübertragungseinrichtung drehbar gelagert anordenbar ist, wobei das Rastierelement aufgrund der Betätigungskraft entlang der Rastierkontur rollend bewegbar ist.

Bei dem Fahrzeug kann es sich um Kraftfahrzeug handeln, insbesondere ein straßengebundenes Fahrzeug, wie einen Personenkraftwagen oder einen Lastkraftwagen. Alternativ kann es sich bei dem Fahrzeug beispielsweise um ein Schienenfahrzeug oder ein Luftfahrzeug handeln. Die Vorrichtung kann zum Einstellen einer Drehbewegung oder Schwenkbewegung eines Bedienelements einer Maschine, beispielsweise eines Fahrzeugs, eingesetzt werden. Bei der Vorrichtung kann es sich um ein Gerät oder einen Teil eines Geräts des Fahrzeugs handeln. Die Vorrichtung kann als eine Rastiervorrichtung bezeichnet werden. Das Bedienelement kann beispielsweise dazu dienen, eine Fahrstufe eines Automatikgetriebes des Fahrzeugs auszuwählen. Dabei kann das Bedienelement insbesondere von einem Fahrer des Fahrzeugs mit der Hand bedient werden, um unterschiedliche Fahrstufen bzw. Gänge des Automatikgetriebes einzustellen. Auch kann das Bedienelement als ein gemeinsames Bedienelement für unterschiedliche Fahrzeugfunktionen ausgeführt sein. Bei dem Bedienelement kann es sich insbesondere um einen Drehknopf oder dergleichen handeln. Somit kann die Vorrichtung zusammen mit dem Bedienelement einen Drehschalter oder dergleichen repräsentieren. Beispielsweise kann die Drehbewegung oder Schwenkbewegung des Bedienelements zwischen zumindest zwei Schaltstellungen bzw. Positionen und zusätzlich oder alternativ zwischen einer Ruhestellung und zumindest einer Auslenkungsstellung erfolgen. Die Rastierkontur kann anordenbar, ausgeformt und zusätzlich oder alternativ ausgebildet sein, um das Rastierelement zu führen und zusätzlich oder alternativ einen Widerstand bzw. eine sensorische, insbesondere haptische, Rückkopplung bezüglich einer Drehbewegung oder Schwenkbewegung oder Schaltstellung des Bedienelements zu ermöglichen. Ein Teilabschnitt des Rastierelements kann mit einem Teilabschnitt der Rastierkontur in Eingriff stehen und durch Eigendrehung aufgrund der Betätigungskraft entlang der Rastierkontur bewegbar sein. Dabei kann der Eingriff einen Formschluss und einen Reibschluss zwischen dem Teilabschnitt des Rastierelements und dem Teilabschnitt der Rastierkontur aufweisen. Die Kraftübertragungseinrichtung kann ausgebildet sein, um mit einer Schalteinrichtung zum Erzeugen von Steuersignalen in Abhängigkeit von der Drehbewegung oder Schwenkbewegung des Bedienelements verbindbar zu sein. Die Kraftübertragungseinrichtung kann mit dem Bedienelement mechanisch starr koppelbar sein.

Gemäß einer Ausführungsform kann das Rastierelement einen zentral angeordneten Lagerabschnitt zur Lagerung an der Kraftübertragungseinrichtung und einen peripher angeordneten Eingriffabschnitt zum Eingreifen in die Rastierkontur aufweist. Dabei kann der Lagerabschnitt zumindest einen Lagerzapfen zur Aufnahme in der Kraftübertragungseinrichtung aufweisen. Eine Drehachse des Rastierelements bei einer Drehbewegung relativ zu der Kraftübertragungseinrichtung kann sich hierbei durch den Lagerabschnitt hindurch erstrecken. Dabei kann die Drehachse eine Symmetrieachse des Rastierelements repräsentieren. Der Lagerabschnitt kann zumindest teilweise von dem Eingriffabschnitt umgeben sein. Eine solche Ausführungsform bietet den Vorteil, dass Haptik sowie Leichtgängigkeit verbessert und Unwucht minimiert werden können.

Dabei kann der Lagerabschnitt des Rastierelements aus einem Hartmaterial mit einer ersten Elastizität ausgeformt sein, wobei der Eingriffabschnitt des Rastierelements aus einem Weichmaterial mit einer zweiten Elastizität ausgeformt sein kann. Hierbei kann die zweite Elastizität des Weichmaterials größer als die erste Elastizität des Hartmaterials sein. Ein solches Rastierelement kann beispielsweise mittels Zweikomponenten-Spritzguss oder dergleichen einstückig oder zweistückig ausgeformt sein oder werden. Eine solche Ausführungsform bietet den Vorteil, dass bei einer Bedienung eine Geräuschdämmung verbessert werden kann. Eine Verwendung des Weichmaterials bzw. einer Weichkomponente kann für einen Kraftaufbau genutzt werden und ferner können durch die Verwendung des Weichmaterials Druckfedern oder dergleichen eingespart werden.

Insbesondere kann das Rastierelement zumindest drei Vorsprünge zum Eingreifen in die Rastierkontur aufweisen. Die Vorsprünge können hierbei als Beine, Arme, Nasen oder dergleichen ausgeformt sein. Somit kann das Rastierelement beispielsweise dreibeinig, vierbeinig, fünfbeinig oder mehrbeinig ausgeführt sein. Die Vorsprünge können sich hierbei radial von einem Zentrum des Rastierelements weg erstrecken. Bei einer Drehbewegung des Rastierelements entlang der Rastierkontur kann zumindest ein Vorsprung in Eingriff mit der Rastierkontur stehen, wobei zumindest ein weiterer Vorsprung außer Eingriff von der Rastierkontur stehen kann. Eine solche Ausführungsform bietet den Vorteil, dass sowohl eine verbesserte Haptik erzielt werden kann als auch in Abhängigkeit von einer Anzahl der Vorsprünge verschiedene Kräfte und/oder Stellwinkel für das Bedienelement erzeugt werden können.

Gemäß einer Ausführungsform kann die Rastierkontur einen Kontaktabschnitt aufweisen, der ausgebildet ist, um ein Eingreifen des Rastierelements zu ermöglichen. Hierbei kann zumindest der Kontaktabschnitt der Rastierkontur aus einem Weichmaterial mit einer Elastizität ausgeformt sein, die größer als eine Elastizität eines Materials der Kraftübertragungseinrichtung sein kann. Eine solche Ausführungsform bietet den Vorteil, dass aufgrund einer Verwendung eines weichen Materials bzw. einer weichen Komponente für die Rastierkontur somit bei der Bedienung entstehende Geräusche stärker gedämmt werden können. Zudem kann das Weichmaterial für einen Kraftaufbau bei einer Bedienung genutzt werden und können daher Druckfedern eingespart werden.

Auch kann die Kraftübertragungseinrichtung ein elastisches Mittel aufweisen, das ausgebildet sein kann, um das Rastierelement in Anlage gegen die Rastierkontur vorzuspannen. Hierbei kann die Kraftübertragungseinrichtung einen ersten Abschnitt und einem zweiten Abschnitt aufweisen, wobei mit dem ersten Abschnitt das Bedienelement mechanisch koppelbar ist, wobei an dem zweiten Abschnitt das Rastierelement drehbar gelagert anordenbar ist. Das elastische Mittel kann dabei zwischen dem ersten Abschnitt und im zweiten Abschnitt angeordnet sein, um den zweiten Abschnitt relativ zu dem ersten Abschnitt vorzuspannen. Eine solche Ausführungsform bietet den Vorteil, dass eine Haptik beim Betätigen des Bedienelements verbessert werden kann sowie eine Positionsgenauigkeit von Schaltstellungen der Vorrichtung erhöht werden kann.

Beispielsweise kann die Rastierkontur ringförmig ausgeformt sein. Hierbei kann ein Kontaktabschnitt der Rastierkontur, der ausgebildet sein kann, um ein Eingreifen des Rastierelements zu ermöglichen, radial einwärts gerichtet angeordnet sein. Eine solche Ausführungsform bietet den Vorteil, dass die Vorrichtung Platz sparend ausgeformt sein kann und eine zuverlässige Führung des Rastierelements in der Rastierkontur realisiert werden kann.

Ferner kann die Kraftübertragungseinrichtung eine erste Drehachse aufweisen, wobei das Rastierelement eine zweite Drehachse aufweisen kann. Hierbei können die erste Drehachse und die zweite Drehachse parallel zueinander angeordnet sein. Dabei können die Kraftübertragungseinrichtung und das Rastierelement ausgebildet sein, um sich aufgrund der Betätigungskraft relativ zueinander gegenläufig um die Drehachsen zu drehen. Insbesondere können die Kraftübertragungseinrichtung und das Rastierelement eine gemeinsame Drehebene oder zueinander parallele Drehebenen aufweisen. Eine solche Ausführungsform bietet den Vorteil, dass eine besonders Platz sparende Ausführung der Vorrichtung ermöglicht wird. Zudem kann eine Betätigung des Bedienelements besonders leichtgängig und dennoch exakt erfolgen. Eine Haptik bei einer Bewegung des Bedienelements kann verbessert werden.

Ein Verfahren zum Einstellen einer Drehbewegung oder Schwenkbewegung eines Bedienelements für ein Fahrzeug, wobei das Verfahren in Verbindung mit einer Ausführungsform der vorstehend genannten Vorrichtung ausführbar ist, weist einen Schritt des Aufnehmens der Betätigungskraft von dem Bedienelement mittels der Kraftübertragungseinrichtung und einen Schritt des Übertragens der Betätigungskraft mittels der Kraftübertragungseinrichtung auf das Rastierelement auf.

Das Verfahren kann in Verbindung mit bzw. unter Verwendung einer Ausführungsform der vorstehend genannten Vorrichtung zum Einstellen vorteilhaft ausgeführt werden, um eine Drehbewegung oder Schwenkbewegung eines Bedienelements für ein Fahrzeug einzustellen.

Eine Schaltvorrichtung, insbesondere zum Schalten eines Automatikgetriebes eines Fahrzeugs, weist ein Bedienelement und eine Ausführungsform der vorstehend genannten Vorrichtung zum Einstellen einer Drehbewegung oder Schwenkbewegung des Bedienelements auf, wobei das Bedienelement mit der Kraftübertragungseinrichtung der Vorrichtung zum Einstellen koppelbar oder gekoppelt ist. In Verbindung mit der Schaltvorrichtung kann eine Ausführungsform der vorstehend genannten Vorrichtung zum Einstellen vorteilhaft verwendet bzw. eingesetzt werden, um eine Drehbewegung oder Schwenkbewegung des Bedienelements einzustellen. Das Rastierelement der Vorrichtung kann in einem zusammengefügten Zustand der Vorrichtung in Anlage gegen die Rastierkontur angeordnet sein. Die Vorrichtung kann ferner eine Trägereinrichtung aufweisen, an der die Rastierkontur, die Kraftübertragungseinrichtung und das Rastierelement angeordnet sein können.

Die Erfindung wird anhand der beigefügten Zeichnungen beispielhaft näher erläutert. Es zeigen:
- Fig. 1: eine perspektivische Ansicht einer Vorrichtung zum Einstellen gemäß einem Ausführungsbeispiel der vorliegenden Erfindung in einem teilmontierten Zustand;
- Fig. 2: eine perspektivische Ansicht der Vorrichtung aus Fig. 1 in einem montierten Zustand;
- Fig. 3: eine perspektivische Ansicht des Rastierelements der Vorrichtung aus Fig. 1 bzw. Fig. 2;
- Figuren 4A bis 4C: Draufsichten der Vorrichtung aus Fig. 1 bzw. Fig. 2 in verschiedenen Bewegungszuständen;
- Fig. 5: eine perspektivische Ansicht einer Vorrichtung zum Einstellen gemäß einem weiteren Ausführungsbeispiel der vorliegenden Erfindung in einem teilmontierten Zustand;
- Fig. 6: eine perspektivische Ansicht der Vorrichtung aus Fig. 5 in einem montierten Zustand;
- Figuren 7A bis 7C: Draufsichten der Vorrichtung aus Fig. 5 bzw. Fig. 6 in verschiedenen Bewegungszuständen;
- Fig. 8: eine perspektivische Ansicht einer Vorrichtung zum Einstellen gemäß noch einem weiteren Ausführungsbeispiel der vorliegenden Erfindung in einem teilmontierten Zustand;
- Fig. 9: eine perspektivische Ansicht der Vorrichtung aus Fig. 8 in einem montierten Zustand;
- Figuren 10A bis 10C: Draufsichten der Vorrichtung aus Fig. 8 bzw. Fig. 9 in verschiedenen Bewegungszuständen; und
- Fig. 11: ein Ablaufdiagramm eines Verfahrens zum Einstellen gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

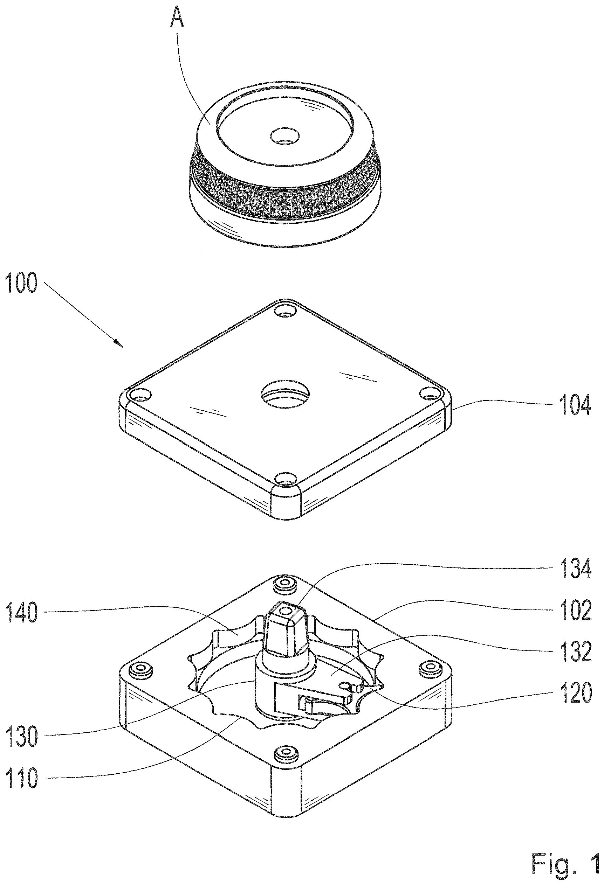

Fig. 1 zeigt eine perspektivische Ansicht einer Einstellvorrichtung 100 bzw. Vorrichtung zum Einstellen gemäß einem Ausführungsbeispiel der vorliegenden Erfindung in einem teilmontierten Zustand. Anders ausgedrückt zeigt Fig. 1 eine Teilexplosionsansicht der Einstellvorrichtung 100. Die Einstellvorrichtung 100 ist ausgebildet, um eine Drehbewegung oder Schwenkbewegung eines Bedienelements A für ein Fahrzeug einzustellen. Die Einstellvorrichtung 100 ist hierbei als eine sogenannte Rastiervorrichtung ausgeführt. Genau gesagt zeigt Fig. 1 somit die Einstellvorrichtung 100 und das Bedienelement A in einer Teilexplosionsansicht.

Die Einstellvorrichtung 100 weist gemäß dem in Fig. 1 dargestellten Ausführungsbeispiel der vorliegenden Erfindung ein Gehäuse 102 und einen Deckel 104 auf. Das Gehäuse 102 und der Deckel 104 sind aneinander befestigbar bzw. miteinander verschraubbar ausgeführt. Das Gehäuse 102 und der Deckel 104 weisen beispielhaft hierbei eine Standfläche mit quadratischem Profil mit abgerundeten Ecken auf. Insbesondere sind das Gehäuse 102 und der Deckel 104 aus einem Kunststoffmaterial oder dergleichen ausgeformt. Der Deckel 104 ist in einem montierten Zustand der Einstellvorrichtung 100 zwischen dem Gehäuse 102 und dem Bedienelement A angeordnet.

Die Einstellvorrichtung 100 weist, lediglich beispielhaft im Bereich des Gehäuses 102 angeordnet und/oder ausgeformt, eine Rastierkontur 110, ein Rastierelement 120 und eine Kraftübertragungseinrichtung 130 auf. Die Rastierkontur 110, das Rastierelement 120 und die Kraftübertragungseinrichtung 130 sind beispielsweise aus zumindest einem Kunststoffmaterial oder unterschiedlichen Kunststoffmaterialien ausgeformt.

Die Rastierkontur 110 weist einen gekrümmten Verlauf auf. Die Rastierkontur 110 ist ausgebildet, um zumindest eine Schaltstellung des Bedienelements A entlang einem kreisförmigen oder bogenförmigen Bewegungsweg des Bedienelements A zu definieren. Gemäß dem in Fig. 1 dargestellten Ausführungsbeispiel der vorliegenden Erfindung ist die Rastierkontur 110 in einem Seitenwandbereich einer Durchgangsöffnung bzw. einem Ausnehmungsabschnitt des Gehäuses 102 angeordnet. Insbesondere ist die Rastierkontur 110 ringförmig ausgeformt. Dabei weist die Rastierkontur 110 einen Verlauf einer Zykloide, insbesondere einer verkürzten Zykloide, entlang einer kreisförmigen Leitkurve auf.

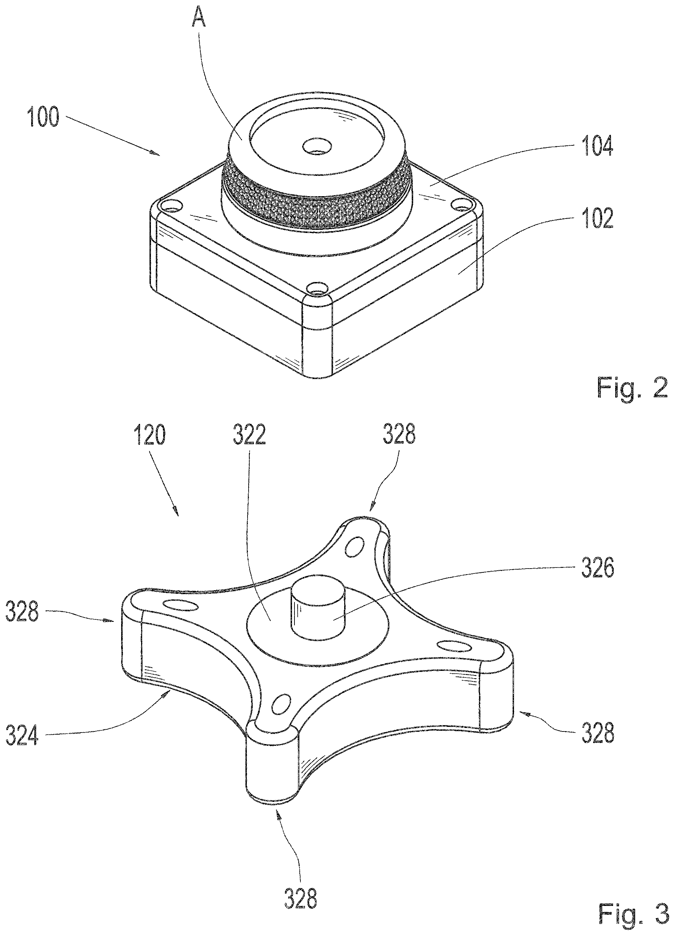

Das Rastierelement 120 ist ausgeformt und ausgebildet, um in die Rastierkontur 110 einzugreifen. Auch ist das Rastierelement 120 ausgebildet, um rollend entlang der Rastierkontur 110 bewegbar zu sein. Dabei ist in dem montierten Zustand der Einstellvorrichtung 100 das Rastierelement 120 in mechanischem Kontakt mit der Rastierkontur 110 angeordnet. Gemäß dem in Fig. 1 dargestellten Ausführungsbeispiel der vorliegenden Erfindung ist das Rastierelement 120 als eine mehrbeinige, insbesondere vierbeinige Rastierrolle ausgeformt. Auf das Rastierelement 120 wird insbesondere unter Bezugnahme auf Fig. 3 nachfolgend noch näher eingegangen.

Die Kraftübertragungseinrichtung 130 ist ausgebildet, um das Rastierelement 120 drehbar zu lagern. Ferner ist die Kraftübertragungseinrichtung 130 mit dem Bedienelement A mechanisch koppelbar. Genau gesagt ist die Kraftübertragungseinrichtung 130 ausgebildet, um eine bei der Drehbewegung oder Schwenkbewegung des Bedienelements A auf das Bedienelement A ausgeübte Betätigungskraft aufzunehmen und die aufgenommene Betätigungskraft auf das Rastierelement 120 zu übertragen. Aufgrund der von dem Bedienelement A mittels der Kraftübertragungseinrichtung 130 auf das Rastierelement 120 übertragenen Betätigungskraft ist das Rastierelement 120 entlang der Rastierkontur rollend bewegbar.

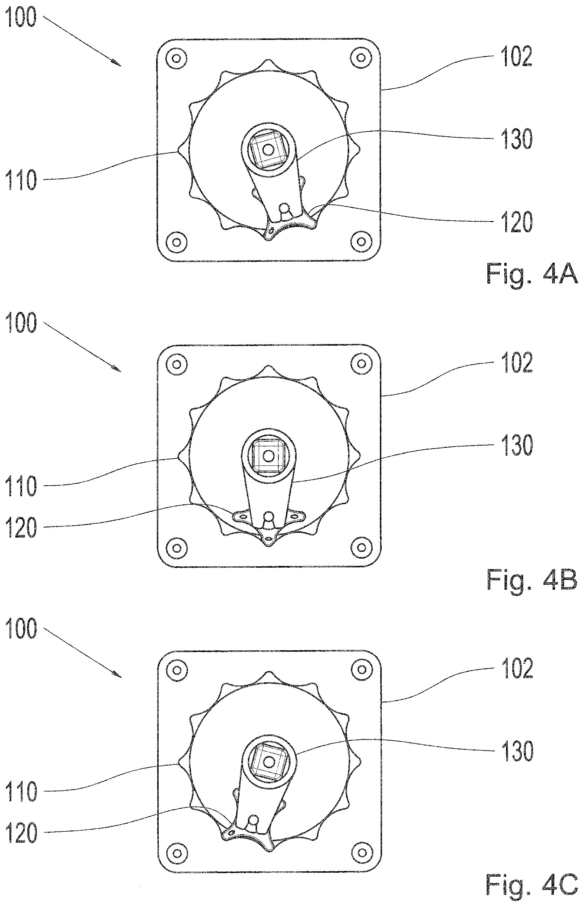

Die Kraftübertragungseinrichtung 130 weist gemäß dem in Fig. 1 dargestellten Ausführungsbeispiel der vorliegenden Erfindung ferner einen Halterungsabschnitt 132 und einen Kopplungsabschnitt 134 auf. Der Halterungsabschnitt 132 ist ausgebildet, das Rastierelement 120 drehbar gelagert an der Kraftübertragungseinrichtung 130 zu halten. Der Kopplungsabschnitt 134 ist ausgebildet, um mechanisch mit dem Bedienelement A gekoppelt zu sein bzw. zu werden. Bei montierter Einstellvorrichtung 100 ist die Kraftübertragungseinrichtung 130 in einem mit dem Bedienelement A gekoppelten Zustand bei einer Drehbewegung des Bedienelements A in der Durchgangsöffnung des Gehäuses 102 drehbar angeordnet. Die Kraftübertragungseinrichtung 130 weist dabei eine erste Drehachse auf. Das Rastierelement 120 weist in einem an der Kraftübertragungseinrichtung 130 drehbar gelagerten Zustand eine zweite Drehachse auf. Dabei sind die erste Drehachse und die zweite Drehachse gemäß dem in Fig. 1 dargestellten Ausführungsbeispiel der vorliegenden Erfindung parallel zueinander angeordnet. Die Kraftübertragungseinrichtung 130 und das Rastierelement 120 sind hierbei ausgebildet, um sich aufgrund der Betätigungskraft relativ zueinander gegenläufig um die Drehachsen zu drehen. Dies wird unter Bezugnahme auf die Figuren 4A bis 4C nachfolgend weiter beschrieben.

Die Rastierkontur 110 weist ferner einen Kontaktabschnitt 140 auf. Der Kontaktabschnitt 140 der als Ringzykloide ausgeformten Rastierkontur 110 ist radial einwärts gerichtet angeordnet. Anders ausgedrückt ist der Kontaktabschnitt 140 in einem montierten Zustand der Einstellvorrichtung 100 dem Rastierelement 120 zugewandt. Der Kontaktabschnitt 120 ist ausgebildet, um ein Eingreifen des Rastierelements 120 in die Rastierkontur 110 zu ermöglichen.

Gemäß dem in Fig. 1 dargestellten Ausführungsbeispiel der vorliegenden Erfindung erstreckt sich die Rastierkontur 110 über einen Teilabschnitt einer Tiefenabmessung der Durchgangsöffnung des Gehäuses 102. Dabei erstreckt sich die Rastierkontur 110 insbesondere von einer im Deckel 104 zugewandten Hauptoberfläche des Gehäuses 102 aus in die Durchgangsöffnung hinein. Damit weist die Durchgangsöffnung in einem Bereich der Rastierkontur 110 ein zykloidisches Profil auf. Die Durchgangsöffnung weist außerhalb des Bereichs der Rastierkontur 110 ein kreisförmiges Profil auf. Somit sind Auflageflächen für das Rastierelement 120 benachbarte zu der Rastierkontur 110 angeordnet, um das Rastierelement 120 zu führen. In einem montierten Zustand der Einstellvorrichtung 100 ist das Rastierelement 120 zwischen den Auflageflächen und dem Deckel 104 geführt entlang der Rastierkontur 110 bewegbar.

Der Deckel 104 weist gemäß dem in Fig. 1 dargestellten Ausführungsbeispiel der vorliegenden Erfindung ein Durchgangsloch für einen Durchtritt des Kopplungsabschnittes 134 der Kraftübertragungseinrichtung 130 auf. Somit ist, in einem verschraubten Zustand des Gehäuses 102 mit dem Deckel 104, das Bedienelement A mechanisch mit der Kraftübertragungseinrichtung 130 bzw. dem Kopplungsabschnitt 134 der Kraftübertragungseinrichtung 130 koppelbar.

Fig. 2 zeigt eine perspektivische Ansicht der Einstellvorrichtung 100 aus Fig. 1 in einem montierten Zustand. Hierbei sind von der Einstellvorrichtung 100 im Wesentlichen das Gehäuse 102 und der Deckel 104 gezeigt. Dabei sind das Gehäuse 102 und der Deckel 104 in einer Montageposition in Anlage gegeneinander dargestellt. Das Bedienelement A ist mit der Einstellvorrichtung 100 mechanisch gekoppelt gezeigt.

Fig. 3 zeigt eine perspektivische Ansicht des Rastierelements 120 der Einstellvorrichtung aus Fig. 1 bzw. Fig. 2. Das Rastierelement 120 weist einen zentral angeordneten Lagerabschnitt 322 zur drehbaren Lagerung des Rastierelements 120 an der Kraftübertragungseinrichtung auf. Auch weist das Rastierelement 120 einen peripher angeordneten Eingriffabschnitt 324 zum Eingreifen in die Rastierkontur 110 auf.

Dabei ist der Lagerabschnitt 322 des Rastierelements 120 aus einem Hartmaterial bzw. einer Hartkomponente mit einer ersten Elastizität ausgeformt. Der Eingriffabschnitt 324 des Rastierelements 120 ist aus einem Weichmaterial bzw. einer Weichkomponente mit einer zweiten Elastizität ausgeformt. Die zweite Elastizität des Weichmaterials ist hierbei größer als die erste Elastizität des Hartmaterials. Die Hartkomponente dient hierbei einer Lagerung des Rastierelements 120. Die Weichkomponente dient einem Kraftaufbau und einer Geräuschdämmung.

Gemäß dem in Fig. 3 dargestellten Ausführungsbeispiel der vorliegenden Erfindung ist in dem Lagerabschnitt 322 des Rastierelements 120 zumindest ein Zapfen 326 bzw. Lagerzapfen ausgeformt. Der Zapfen 326 ist hierbei an einer Drehachse des Rastierelements 120 angeordnet bzw. erstreckt sich entlang einer Drehachse des Rastierelements 120.

Allgemein gesagt kann das Rastierelement 120 zumindest drei Vorsprünge 328 zum Eingreifen in die Rastierkontur 110 aufweisen. Gemäß dem in Fig. 3 dargestellten Ausführungsbeispiel der vorliegenden Erfindung weist das Rastierelement 120 vier Vorsprünge 328 bzw. Beine auf. Die Vorsprünge 328 erstrecken sich hierbei radial von dem Lagerabschnitt 322 des Rastierelements 120 weg.

Figuren 4A bis 4C zeigen Draufsichten der Einstellvorrichtung 100 aus Fig. 1 bzw. Fig. 2 in verschiedenen Bewegungszuständen. Dabei sind von der Einstellvorrichtung 100 den Figuren 4A bis 4C jeweils das Gehäuse 102, die Rastierkontur 110, das Rastierelement 120 und die Kraftübertragungseinrichtung 130 dargestellt. Das Bedienelement ist hierbei in den Darstellungen weggelassen. Die Figuren 4A bis 4C zeigen sequenziell von Fig. 4A über Fig. 4B bis Fig. 4C die Einstellvorrichtung 100 bei einer Drehbewegung der Kraftübertragungseinrichtung 130 im Uhrzeigersinn, wobei das Rastierelement 120 in einer Drehbewegung entgegen dem Uhrzeigersinn entlang der Rastierkontur 110 rollt.

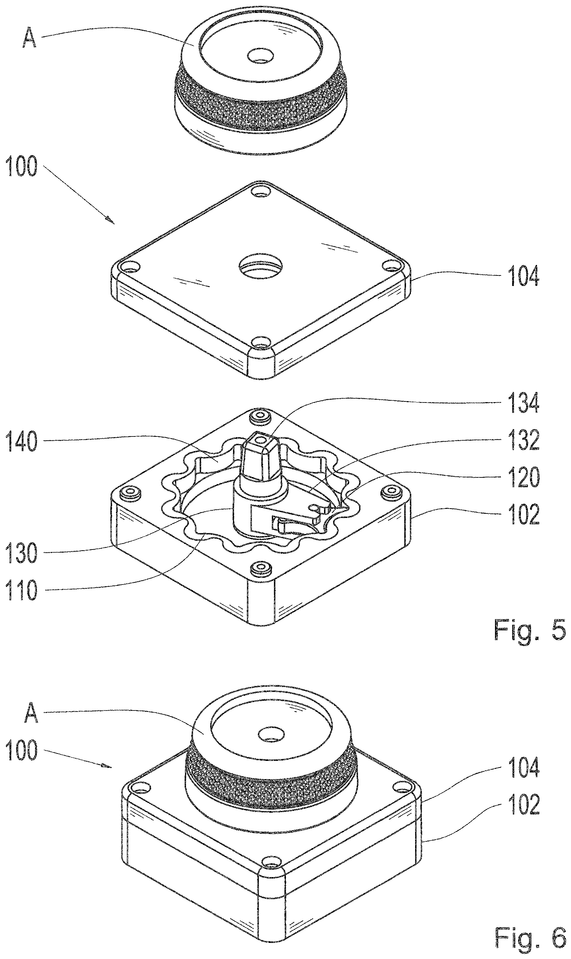

Fig. 5 zeigt eine perspektivische Ansicht einer Einstellvorrichtung 100 bzw. Vorrichtung zum Einstellen gemäß einem weiteren Ausführungsbeispiel der vorliegenden Erfindung in einem teilmontierten Zustand. Hierbei entspricht die Darstellung in Fig. 5 der Darstellung aus Fig. 1 und entspricht die Einstellvorrichtung 100 in Fig. 5 der Einstellvorrichtung aus Fig. 1 mit Ausnahme dessen, dass bei der Einstellvorrichtung 100 in Fig. 5 zumindest der Kontaktabschnitt 140 der Rastierkontur 110 aus einem Weichmaterial mit einer Elastizität ausgeformt ist, die größer als eine Elastizität eines Materials der Kraftübertragungseinrichtung 130 und/oder des Gehäuses 102 ist. Insbesondere ist in Fig. 5 die Rastierkontur 110 aus dem Weichmaterial ausgeformt. Das Weichmaterial bzw. die Weichkomponente dient einem Kraftaufbau sowie einer Geräuschdämmung. Die Durchgangsöffnung in dem Gehäuse 102 weist in einem Bereich der Rastierkontur 110 ein wellenförmiges Profil auf, an dem radial einwärts das Weichmaterial der zykloidischen Rastierkontur 110 angeordnet ist.

Fig. 6 zeigt eine perspektivische Ansicht der Einstellvorrichtung 100 aus Fig. 5 in einem montierten Zustand. Hierbei sind von der Einstellvorrichtung 100 im Wesentlichen das Gehäuse 102 und der Deckel 104 gezeigt. Dabei sind das Gehäuse 102 und der Deckel 104 in einer Montageposition in Anlage gegeneinander dargestellt. Das Bedienelement A ist mit der Einstellvorrichtung 100 mechanisch gekoppelt gezeigt.

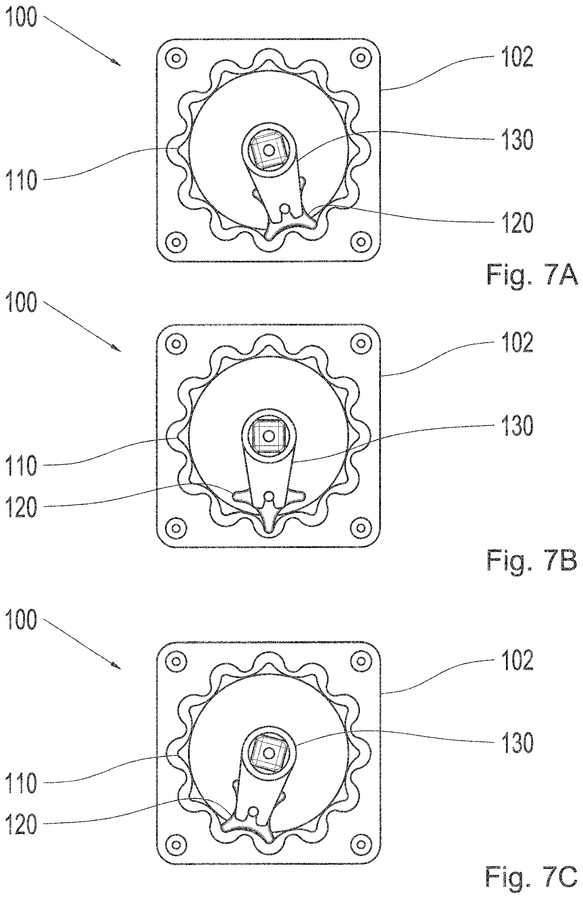

Figuren 7A bis 7C zeigen Draufsichten der Einstellvorrichtung 100 aus Fig. 5 bzw. Fig. 6 in verschiedenen Bewegungszuständen. Dabei sind von der Einstellvorrichtung 100 den Figuren 7A bis 7C jeweils das Gehäuse 102, die Rastierkontur 110, das Rastierelement 120 und die Kraftübertragungseinrichtung 130 dargestellt. Das Bedienelement ist hierbei in den Darstellungen weggelassen. Die Figuren 7A bis 7C zeigen sequenziell von Fig. 7A über Fig. 7B bis Fig. 7C die Einstellvorrichtung 100 bei einer Drehbewegung der Kraftübertragungseinrichtung 130 im Uhrzeigersinn, wobei das Rastierelement 120 in einer Drehbewegung entgegen dem Uhrzeigersinn entlang der Rastierkontur 110 rollt.

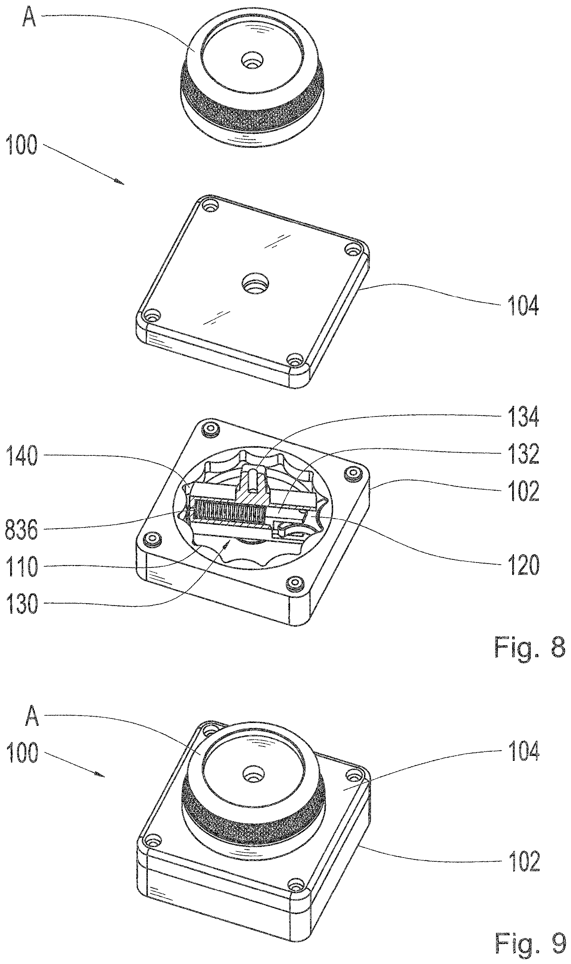

Fig. 8 zeigt eine perspektivische Ansicht einer Einstellvorrichtung 100 bzw. Vorrichtung zum Einstellen gemäß noch einem weiteren Ausführungsbeispiel der vorliegenden Erfindung in einem teilmontierten Zustand. Hierbei entspricht die Darstellung in Fig. 8 der Darstellung aus Fig. 5 und entspricht die Einstellvorrichtung 100 in Fig. 8 der Einstellvorrichtung aus Fig. 5 mit Ausnahme dessen, dass bei der Einstellvorrichtung 100 in Fig. 8 die Kraftübertragungseinrichtung 130 ein elastisches Mittel 836 aufweist, das ausgebildet ist, um das Rastierelement 120 in Anlage gegen die Rastierkontur 110 vorzuspannen, und dass die Durchgangsöffnung in dem Gehäuse 102 auch in dem Bereich der Rastierkontur 110 ein kreisförmiges Profil aufweist, an dem radial einwärts das Weichmaterial der zykloidischen Rastierkontur 110 angeordnet ist. Somit weist das Weichmaterial der Rastierkontur 110 in Fig. 8 eine andere Form als in Fig. 5 auf.

Das elastische Mittel 836 der Kraftübertragungseinrichtung 130 ist gemäß dem in Fig. 8 dargestellten Ausführungsbeispiel der vorliegenden Erfindung als eine Druckfeder, beispielsweise in Form einer in einer Führung geführten Spiralfeder, ausgeführt. Dabei ist das elastische Mittel 836 zwischen dem Halterungsabschnitt 132 und dem Kopplungsabschnitt 134 angeordnet. Der Halterungsabschnitt 132 und der Kopplungsabschnitt 134 sind hierbei relativ zueinander beweglich.

Fig. 9 zeigt eine perspektivische Ansicht der Einstellvorrichtung 100 aus Fig. 8 in einem montierten Zustand. Hierbei sind von der Einstellvorrichtung 100 im Wesentlichen das Gehäuse 102 und der Deckel 104 gezeigt. Dabei sind das Gehäuse 102 und der Deckel 104 in einer Montageposition in Anlage gegeneinander dargestellt. Das Bedienelement A ist mit der Einstellvorrichtung 100 mechanisch gekoppelt gezeigt.

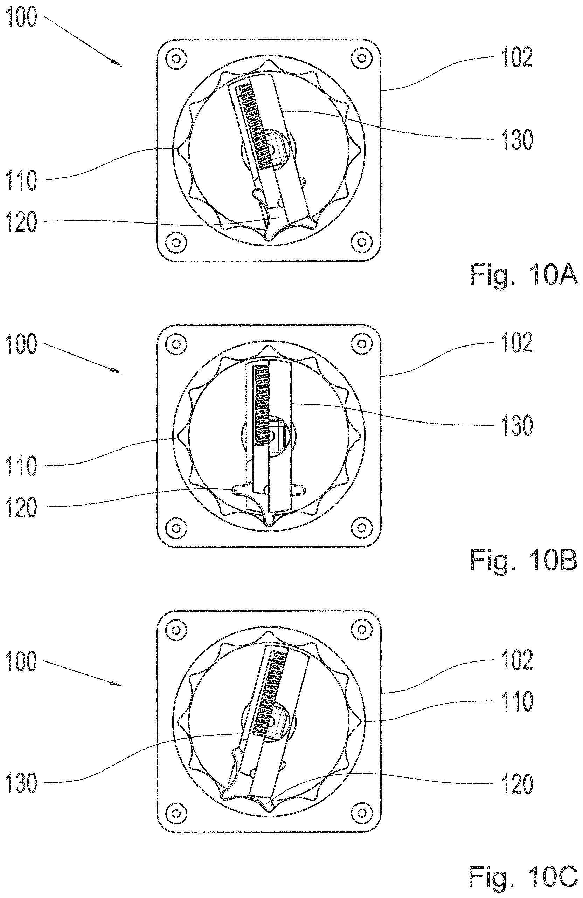

Figuren 10A bis 10C zeigen Draufsichten der Einstellvorrichtung 100 aus Fig. 8 bzw. Fig. 9 in verschiedenen Bewegungszuständen. Dabei sind von der Einstellvorrichtung 100 den Figuren 10A bis 10C jeweils das Gehäuse 102, die Rastierkontur 110, das Rastierelement 120 und die Kraftübertragungseinrichtung 130 dargestellt. Das Bedienelement ist hierbei in den Darstellungen weggelassen. Die Figuren 10A bis 10C zeigen sequenziell von Fig. 10A über Fig. 10B bis Fig. 10C die Einstellvorrichtung 100 bei einer Drehbewegung der Kraftübertragungseinrichtung 130 im Uhrzeigersinn, wobei das Rastierelement 120 in einer Drehbewegung entgegen dem Uhrzeigersinn entlang der Rastierkontur 110 rollt.

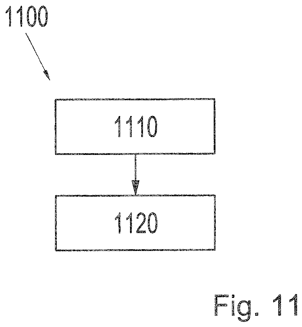

Fig. 11 zeigt ein Ablaufdiagramm eines Verfahrens 1100 zum Einstellen gemäß einem Ausführungsbeispiel der vorliegenden Erfindung. Das Verfahren 1100 ist ausführbar, um eine Drehbewegung oder Schwenkbewegung eines Bedienelements für ein Fahrzeug einzustellen. Dabei ist das Verfahren 1100 in Verbindung mit einer Einstellvorrichtung bzw. Vorrichtung zum Einstellen einer Drehbewegung oder Schwenkbewegung eines Bedienelements für ein Fahrzeug ausführbar. Bei der Einstellvorrichtung bzw. Vorrichtung zum Einstellen handelt es sich beispielsweise um die Einstellvorrichtung aus einer der Figuren 1 bis 10C oder eine ähnliche Vorrichtung.

Die Einstellvorrichtung, unter deren Verwendung das Verfahren 1100 ausführbar ist, weist eine gekrümmte Rastierkontur zum Definieren zumindest einer Schaltstellung des Bedienelements auf. Auch weist die Vorrichtung ein Rastierelement zum Eingreifen in die Rastierkontur auf. Ferner weist die Vorrichtung eine Kraftübertragungseinrichtung auf, mit der das Bedienelement mechanisch koppelbar ist, um eine bei der Drehbewegung oder Schwenkbewegung des Bedienelements auf das Bedienelement ausgeübte Betätigungskraft aufzunehmen und auf das Rastierelement zu übertragen. Dabei ist das Rastierelement an der Kraftübertragungseinrichtung drehbar gelagert anordenbar, wobei das Rastierelement aufgrund der Betätigungskraft entlang der Rastierkontur rollend bewegbar ist.

Das Verfahren 1100 weist einen Schritt 1110 des Aufnehmens und einen Schritt 1120 des Übertragens auf. Im Schritt 1110 des Aufnehmens wird die Betätigungskraft von dem Bedienelement mittels der Kraftübertragungseinrichtung aufgenommen. Im Schritt 1120 des Übertragens wird die aufgenommene Betätigungskraft mittels der Kraftübertragungseinrichtung auf das Rastierelement übertragen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Vorrichtung zum Einstellen bzw. Einstellvorrichtung bzw. Rastiervorrichtung
- 102: Gehäuse
- 104: Deckel
- 110: Rastierkon-tur
- 120: Rastier-element
- 130: Kraftübertragungseinrichtung
- 132: Halterungsabschnitt
- 134: Kopplungsabschnitt
- 140: Kontaktabschnitt
- 322: Lagerabschnitt
- 324: Eingriffabschnitt
- 326: Zapfen
- 328: Vorsprung
- 836: elastisches Mittel
- 1100: Verfahren zum Einstellen
- 1110: Schritt des Aufnehmens
- 1120: Schritt des Übertragens
- A: Bedienelement

## Patentansprüche

1. Vorrichtung (100) zum Einstellen einer Drehbewegung oder Schwenkbewegung eines Bedienelements (A) für ein Fahrzeug, wobei die Vorrichtung (100) eine gekrümmte Rastierkontur (110) zum Definieren zumindest einer Schaltstellung des Bedienelements (A), ein Rastierelement (120) zum Eingreifen in die Rastierkontur (110) und eine Kraftübertragungseinrichtung (130) aufweist, mit der das Bedienelement (A) mechanisch koppelbar ist, um eine bei der Drehbewegung oder Schwenkbewegung des Bedienelements (A) auf das Bedienelement (A) ausgeübte Betätigungskraft aufzunehmen und auf das Rastierelement (120) zu übertragen, wobei das Rastierelement (120) an der Kraftübertragungseinrichtung (130) drehbar gelagert anordenbar ist, wobei das Rastierelement (120) aufgrund der Betätigungskraft entlang der Rastierkontur (110) rollend bewegbar ist, wobei das Rastierelement (120) einen zentral angeordneten Lagerabschnitt (322) zur Lagerung an der Kraftübertragungseinrichtung (130) und einen peripher angeordneten Eingriffabschnitt (324) zum Eingreifen in die Rastierkontur (110) aufweist, **dadurch gekennzeichnet, dass** der Lagerabschnitt (322) des Rastierelements (120) aus einem Hartmaterial mit einer ersten Elastizität ausgeformt ist und der Eingriffabschnitt (324) des Rastierelements (120) aus einem Weichmaterial mit einer zweiten Elastizität ausgeformt ist, wobei die zweite Elastizität des Weichmaterials größer als die erste Elastizität des Hartmaterials ist.

2. Vorrichtung (100) gemäß Anspruch 1, **dadurch gekennzeichnet, dass** das Rastierelement (120) zumindest drei Vorsprünge (328) zum Eingreifen in die Rastierkontur (110) aufweist.

3. Vorrichtung (100) zum Einstellen einer Drehbewegung oder Schwenkbewegung eines Bedienelements (A) für ein Fahrzeug, wobei die Vorrichtung (100) eine gekrümmte Rastierkontur (110) zum Definieren zumindest einer Schaltstellung des Bedienelements (A), ein Rastierelement (120) zum Eingreifen in die Rastierkontur (110) und eine Kraftübertragungseinrichtung (130) aufweist, mit der das Bedienelement (A) mechanisch koppelbar ist, um eine bei der Drehbewegung oder Schwenkbewegung des Bedienelements (A) auf das Bedienelement (A) ausgeübte Betätigungskraft aufzunehmen und auf das Rastierelement (120) zu übertragen, wobei das Rastierelement (120) an der Kraftübertragungseinrichtung (130) drehbar gelagert anordenbar ist, wobei das Rastierelement (120) aufgrund der Betätigungskraft entlang der Rastierkontur (110) rollend bewegbar ist, **dadurch gekennzeichnet, dass** die Rastierkontur (110) einen Kontaktabschnitt (140) aufweist, der ausgebildet ist, um ein Eingreifen des Rastierelements (120) zu ermöglichen, wobei zumindest der Kontaktabschnitt (140) der Rastierkontur (110) aus einem Weichmaterial mit einer Elastizität ausgeformt ist, die größer als eine Elastizität eines Materials der Kraftübertragungseinrichtung (130) ist.

4. Vorrichtung (100) gemäß Anspruch 3, **dadurch gekennzeichnet, dass** das Rastierelement (120) einen zentral angeordneten Lagerabschnitt (322) zur Lagerung an der Kraftübertragungseinrichtung (130) und einen peripher angeordneten Eingriffabschnitt (324) zum Eingreifen in die Rastierkontur (110) aufweist.

5. Vorrichtung (100) gemäß Anspruch 4, **dadurch gekennzeichnet, dass** der Lagerabschnitt (322) des Rastierelements (120) aus einem Hartmaterial mit einer ersten Elastizität ausgeformt ist und der Eingriffabschnitt (324) des Rastierelements (120) aus einem Weichmaterial mit einer zweiten Elastizität ausgeformt ist, wobei die zweite Elastizität des Weichmaterials größer als die erste Elastizität des Hartmaterials ist.

6. Vorrichtung (100) gemäß einem der Ansprüche 3 bis 5, **dadurch gekennzeichnet, dass** das Rastierelement (120) zumindest drei Vorsprünge (328) zum Eingreifen in die Rastierkontur (110) aufweist.

7. Vorrichtung (100) gemäß einem der vorangegangenen Ansprüche, **dadurch gekennzeichnet, dass** die Kraftübertragungseinrichtung (130) ein elastisches Mittel (836) aufweist, das ausgebildet ist, um das Rastierelement (120) in Anlage gegen die Rastierkontur (110) vorzuspannen.

8. Vorrichtung (100) gemäß einem der vorangegangenen Ansprüche, **dadurch gekennzeichnet, dass** die Rastierkontur (110) ringförmig ausgeformt ist, wobei ein Kontaktabschnitt (140) der Rastierkontur (110), der ausgebildet ist, um ein Eingreifen des Rastierelements (120) zu ermöglichen, radial einwärts gerichtet angeordnet ist.

9. Vorrichtung (100) gemäß einem der vorangegangenen Ansprüche, **dadurch gekennzeichnet, dass** die Kraftübertragungseinrichtung (130) eine erste Drehachse aufweist und das Rastierelement (120) eine zweite Drehachse aufweist, wobei die erste Drehachse und die zweite Drehachse parallel zueinander angeordnet sind, wobei die Kraftübertragungseinrichtung (130) und das Rastierelement (120) ausgebildet sind, um sich aufgrund der Betätigungskraft relativ zueinander gegenläufig um die Drehachsen zu drehen.

10. Schaltvorrichtung, insbesondere zum Schalten eines Automatikgetriebes eines Fahrzeugs, **dadurch gekennzeichnet, dass** die Schaltvorrichtung ein Bedienelement (A) und eine Vorrichtung (100) zum Einstellen gemäß einem der vorangegangenen Ansprüche aufweist, wobei das Bedienelement (A) mit der Kraftübertragungseinrichtung (130) der Vorrichtung (100) zum Einstellen koppelbar oder gekoppelt ist.

11. Verfahren (1100) zum Einstellen einer Drehbewegung oder Schwenkbewegung eines Bedienelements (A) einer Schaltvorrichtung gemäß Anspruch 10, **dadurch gekennzeichnet, dass** das Verfahren (1100) einen Schritt (1110) des Aufnehmens der Betätigungskraft von dem Bedienelement (A) mittels der Kraftübertragungseinrichtung (130) der Schaltvorrichtung und einen Schritt (1120) des Übertragens der Betätigungskraft mittels der Kraftübertragungseinrichtung (130) auf das Rastierelement (120) der Schaltvorrichtung aufweist.

## Claims

1. Apparatus (100) for adjusting a rotary movement or pivoting movement of a control element (A) for a vehicle, wherein the apparatus (100) has a curved detent contour (110) for defining at least one shifting position of the control element (A), a detent element (120) for engaging in the detent contour (110) and a force transmission device (130) to which the control element (A) can be mechanically coupled in order to absorb an actuating force, which is exerted on the control element (A) during the rotary movement or pivoting movement of the control element (A), and to transmit said actuating force to the detent element (120), wherein the detent element (120) can be arranged so as to be mounted rotatably on the force transmission device (130), wherein the detent element (120) is movable in a rolling manner along the detent contour (110) owing to the actuating force, wherein the detent element (120) has a centrally arranged bearing portion (322) for mounting on the force transmission device (130) and a peripherally arranged engagement portion (324) for engaging in the detent contour (110), **characterized in that** the bearing portion (322) of the detent element (120) is formed from a hard material having a first elasticity, and the engagement portion (324) of the detent element (120) is formed from a soft material having a second elasticity, wherein the second elasticity of the soft material is greater than the first elasticity of the hard material.

2. Apparatus (100) according to Claim 1, **characterized in that** the detent element (120) has at least three projections (328) for engaging in the detent contour (110) .

3. Apparatus (100) for adjusting a rotary movement or pivoting movement of a control element (A) for a vehicle, wherein the apparatus (100) has a curved detent contour (110) for defining at least one shifting position of the control element (A), a detent element (120) for engaging in the detent contour (110) and a force transmission device (130) to which the control element (A) can be mechanically coupled in order to absorb an actuating force, which is exerted on the control element (A) during the rotary movement or pivoting movement of the control element (A), and to transmit said actuating force to the detent element (120), wherein the detent element (120) can be arranged so as to be mounted rotatably on the force transmission device (130), wherein the detent element (120) is movable in a rolling manner along the detent contour (110) owing to the actuating force, **characterized in that** the detent contour (110) has a contact portion (140) which is designed to permit engagement of the detent element (120), wherein at least the contact portion (140) of the detent contour (110) is formed from a soft material having an elasticity which is greater than an elasticity of a material of the force transmission device (130).

4. Apparatus (100) according to Claim 3, **characterized in that** the detent element (120) has a centrally arranged bearing portion (322) for mounting on the force transmission device (130) and a peripherally arranged engagement portion (324) for engaging in the detent contour (110).

5. Apparatus (100) according to Claim 4, **characterized in that** the bearing portion (322) of the detent element (120) is formed from a hard material having a first elasticity, and the engagement portion (324) of the detent element (120) is formed from a soft material having a second elasticity, wherein the second elasticity of the soft material is greater than the first elasticity of the hard material.

6. Apparatus (100) according to one of Claims 3 to 5, **characterized in that** the detent element (120) has at least three projections (328) for engaging in the detent contour (110).

7. Apparatus (100) according to one of the preceding claims, **characterized in that** the force transmission device (130) has an elastic means (836) which is designed to pretension the detent element (120) to bear against the detent contour (110).

8. Apparatus (100) according to one of the preceding claims, **characterized in that** the detent contour (110) is formed annually, wherein a contact portion (140) of the detent contour (110), which contact portion is designed to permit engagement of the detent element (120), is arranged in a manner directed radially inwards.

9. Apparatus (100) according to one of the preceding claims, **characterized in that** the force transmission device (130) has a first axis of rotation and the detent element (120) has a second axis of rotation, wherein the first axis of rotation and the second axis of rotation are arranged parallel to each other, wherein the force transmission device (130) and the detent element (120) are designed to rotate relative to each other in an opposed manner about the axis of rotation owing to the actuating force.

10. Shifting apparatus, in particular for shifting an automatic transmission of a vehicle, **characterized in that** the shifting apparatus has a control element (A) and an adjusting apparatus (100) according to one of the preceding claims, wherein the control element (A) can be coupled or is coupled to the force transmission device (130) of the adjusting apparatus (100).

11. Method (1100) for adjusting a rotary movement or pivoting movement of a control element (A) of a shifting apparatus according to Claim 10, **characterized in that** the method (1100) has a step (1110) of absorbing the actuating force from the control element (A) by means of the force transmission device (130) of the shifting apparatus and a step (1120) of transmitting the actuating force to the detent element (120) of the shifting apparatus by means of the force transmission device (130).

## Revendications

1. Dispositif (100) de réglage d'un mouvement de rotation ou de pivotement d'un élément de commande (A) destiné à un véhicule, le dispositif (100} comportant un contour d'encliquetage incurvé (110) destiné à définir au moins une position de commutation de l'élément de commande (A), un élément d'encliquetage (120) destiné à s'engager dans le contour d'encliquetage (110) et un mécanisme de transmission de force (130) auquel l'élément de commande (A) peut être accouplé mécaniquement afin d'absorber une force d'actionnement exercée sur l'élément de commande (A) lors du mouvement de rotation ou de pivotement de l'élément de commande (A) et de la transmettre à l'élément d'encliquetage (120), l'élément d'encliquetage (120) pouvant être disposé sur le mécanisme de transmission de force (130) en étant monté sur palier de manière rotative, l'élément d'encliquetage (120) pouvant être déplacé par roulement le long du contour d'encliquetage (110) en raison de la force d'actionnement, l'élément d'encliquetage (120) comportant une portion formant palier (322) disposée au centre et destiné à supporter sur palier le mécanisme de transmission de force (130) et une portion d'engagement (324) disposée en périphérie et destinée à s'engager avec le contour d'encliquetage (110), **caractérisé en ce que** la portion formant palier (322) de l'élément d'encliquetage (120) est formée à partir d'un matériau dur présentant une première élasticité et la portion d'engagement (324) de l'élément d'encliquetage (120) est formée à partir d'un matériau souple présentant une deuxième élasticité, la deuxième élasticité du matériau souple étant supérieure à la première élasticité du matériau dur.

2. Dispositif (100) selon la revendication 1, **caractérisé en ce que** l'élément d'encliquetage (120) comporte au moins trois saillies (328) destinées à s'engager dans le contour d'encliquetage (110).

3. Dispositif (100) de réglage d'un mouvement de rotation ou de pivotement d'un élément de commande (A) destiné à un véhicule, le dispositif (100) comportant un contour d'encliquetage incurvé (110) destiné à définir au moins une position de commutation de l'élément de commande (A), un élément d'encliquetage (120) destiné à s'engager dans le contour d'encliquetage (110) et un mécanisme de transmission de force (130) auquel l'élément de commande (A) peut être accouplé mécaniquement afin d'absorber une force d'actionnement exercée sur l'élément de commande (A) lors du mouvement de rotation ou de pivotement de l'élément de commande (A) et de la transmettre à l'élément d'encliquetage (120), l'élément d'encliquetage (120) pouvant être disposé sur le mécanisme de transmission de force (130) en étant monté sur palier de manière rotative, l'élément d'encliquetage (120) pouvant être déplacé par roulement le long du contour d'encliquetage (110) en raison de la force d'actionnement, **caractérisé en ce que** le contour d'encliquetage (110) comporte une portion de contact (140) qui est conçue pour permettre l'engagement de l'élément d'encliquetage (120), au moins la portion de contact (140) du contour d'encliquetage (110) étant formée à partir d'un matériau souple dont l'élasticité est supérieure à l'élasticité d'un matériau du mécanisme de transmission de force (130).

4. Dispositif (100) selon la revendication 3, **caractérisé en ce que** l'élément d'encliquetage (120) comporte une portion formant palier (322) disposée au centre et destinée à supporter sur palier le mécanisme de transmission de force (130) et une portion d'engagement (324) disposée en périphérie et destinée à s'engager dans le contour d'encliquetage (110).

5. Dispositif (100) selon la revendication 4, **caractérisé en ce que** la portion formant palier (322) de l'élément d'encliquetage (120) est formée à partir d'un matériau dur présentant une première élasticité et la portion d'engagement (324) de l'élément d'encliquetage (120) est formée à partir d'un matériau souple présentant une deuxième élasticité, la deuxième élasticité du matériau souple étant supérieure à la première élasticité du matériau dur.

6. Dispositif (100) selon l'une des revendications 3 à 5, **caractérisé en ce que** l'élément d'encliquetage (120) comporte au moins trois saillies (328) destinées à s'engager dans le contour d'encliquetage (110).

7. Dispositif (100) selon l'une des revendications précédentes, **caractérisé en ce que** le mécanisme de transmission de force (130) comporte un moyen élastique (836) qui est conçu pour précontraindre l'élément d'encliquetage (120) en appui contre le contour d'encliquetage (110).

8. Dispositif (100) selon l'une des revendications précédentes, **caractérisé en ce que** le contour d'encliquetage (110) est de forme annulaire, une portion de contact (140) du contour d'encliquetage (110), qui est conçue pour permettre l'engagement de l'élément d'encliquetage (120), étant disposée de manière à être orientée radialement vers l'intérieur.

9. Dispositif (100) selon l'une des revendications précédentes, **caractérisé en ce que** le mécanisme de transmission de force (130) comporte un premier axe de rotation et l'élément d'encliquetage (120) comporte un deuxième axe de rotation, le premier axe de rotation et le deuxième axe de rotation étant disposés parallèlement l'un à l'autre, le mécanisme de transmission de force (130) et l'élément d'encliquetage (120) étant conçus pour tourner l'un par rapport à l'autre sur des axes de rotation dans des directions opposées en raison de la force d'actionnement.

10. Dispositif de commutation, en particulier destiné à commuter une transmission automatique d'un véhicule, **caractérisé en ce que** le dispositif de commutation comporte un élément de commande (A) et un dispositif de réglage (100) selon l'une des revendications précédentes, l'élément d'actionnement (A) étant ou pouvant être accouplé au mécanisme de transmission de force (130) du dispositif de réglage (100).

11. Procédé (1100) de réglage d'un mouvement de rotation ou de pivotement d'un élément de commande (A) d'un dispositif de commutation selon la revendication 10, **caractérisé en ce que** le procédé (1100) comprend une étape (1110) de réception de la force de commande de l'élément de commande (A) au moyen du mécanisme de transmission de force (130) du dispositif de commutation et une étape (1120) de transmission de la force d'actionnement au moyen du mécanisme de transmission de force (130) à l'élément d'encliquetage (120) du dispositif de commutation.
